(19) Europäisches Patentamt / European Patent Office / Office européen des brevets

(11) **EP 4 283 515 B1**

(12) **EUROPEAN PATENT SPECIFICATION**

(45) Date of publication and mention
of the grant of the patent:
**28.01.2026   Bulletin 2026/05**

(21) Application number: **21920556.4**

(22) Date of filing: **27.07.2021**

(51) International Patent Classification (IPC):
*G06F 18/25* (2023.01)      *G06V 20/56* (2022.01)
*G01S 17/86* (2020.01)      *G01S 17/89* (2020.01)
*G01S 17/931* (2020.01)      *G06N 3/0464* (2023.01)
*G06N 3/08* (2023.01)      *G06T 7/11* (2017.01)
*G06T 7/80* (2017.01)      *G06V 10/82* (2022.01)
*G06V 20/58* (2022.01)      *G06V 20/64* (2022.01)
*G01S 7/48* (2006.01)      *G06V 10/80* (2022.01)

(52) Cooperative Patent Classification (CPC):
G06N 3/0464; G01S 7/4808; G01S 17/86;
G01S 17/89; G01S 17/931; G06F 18/253;
G06N 3/08; G06T 7/11; G06T 7/80; G06V 10/806;
G06V 10/82; G06V 20/56; G06V 20/58;
G06V 20/64; G06T 2207/10024;      (Cont.)

(86) International application number:
**PCT/CN2021/108585**

(87) International publication number:
**WO 2022/156175 (28.07.2022 Gazette 2022/30)**

(54) **DETECTION METHOD, SYSTEM, AND DEVICE BASED ON FUSION OF IMAGE AND POINT CLOUD INFORMATION, AND STORAGE MEDIUM**

DETEKTIONSVERFAHREN, SYSTEM UND VORRICHTUNG AUF BASIS DER FUSION VON BILD- UND PUNKTWOLKENINFORMATIONEN UND SPEICHERMEDIUM

PROCÉDÉ, SYSTÈME ET DISPOSITIF DE DÉTECTION BASÉS SUR UNE FUSION D'INFORMATIONS D'IMAGE ET DE NUAGE DE POINTS, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.01.2021   CN 202110076345**

(43) Date of publication of application:
**29.11.2023   Bulletin 2023/48**

(73) Proprietor: **Shanghai Westwell Technology Co., Ltd.**
**Shanghai 200050 (CN)**

(72) Inventors:
• **ZHANG, Rong**
  **Shanghai 200050 (CN)**
• **ZHAO, Zhao**
  **Shanghai 200050 (CN)**

(74) Representative: **Ipsilon**
**Le Contemporain**
**50 Chemin de la Bruyère**
**69574 Dardilly Cedex (FR)**

(56) References cited:
**CN-A- 109 443 369      CN-A- 110 135 485**
**CN-A- 110 853 037      CN-A- 112 861 653**
**US-A1- 2020 160 559**

• **ROVID ANDRAS ET AL: "Towards Raw Sensor Fusion in 3D Object Detection", 2019 IEEE 17TH WORLD SYMPOSIUM ON APPLIED MACHINE INTELLIGENCE AND INFORMATICS (SAMI), IEEE, 24 January 2019 (2019-01-24), pages 293 - 298, XP033587801, DOI: 10.1109/ SAMI.2019.8782779**

(Cont. next page)

- SOURABH VORA ET AL: "PointPainting: Sequential Fusion for 3D Object Detection", ARXIV.ORG, CORNELL UNIVERSITY LIBRARY, 201 OLIN LIBRARY CORNELL UNIVERSITY ITHACA, NY 14853, 22 November 2019 (2019-11-22), XP081659190
- MEYER GREGORY P ET AL: "Sensor Fusion for Joint 3D Object Detection and Semantic Segmentation", 2019 IEEE/CVF CONFERENCE ON COMPUTER VISION AND PATTERN RECOGNITION WORKSHOPS (CVPRW), IEEE, 16 June 2019 (2019-06-16), pages 1230 - 1237, XP033747123, DOI: 10.1109/CVPRW.2019.00162

(52) Cooperative Patent Classification (CPC): (Cont.)
G06T 2207/10028; G06T 2207/20081; G06T 2207/20084; G06T 2207/30208

## Description

## TECHNICAL FIELD

The present disclosure relates to 3D target detection technology, and more particularly to an algorithm for 3D target detection using fusion of a LiDAR sensor and an image sensor.

## BACKGROUND

Nowadays, there are mainly three kinds of 3D target detection methods in the unmanned driving field. The first kind includes using the binocular stereo vision principle for depth estimation of images, and then converting the 2D image detection results into 3D space. The second kind includes detecting 3D targets by directly processing point cloud through a convolutional neural network or other machine learning methods, only using pure 3D point clouds of LiDAR sensors. The third kind includes fusing camera images and point cloud information of the LiDAR sensor, and then using a convolutional neural network and other mutual verification strategies to detect 3D targets.

However, the existing three detection methods all have certain defects and shortcomings.

Due to the limitations of the binocular stereo vision principle, the first kind of method has a much lower accuracy in depth measurement compared to LiDAR sensors, the detection accuracy and reliability of this kind of method will seriously decrease especially when the target is far from the camera.

The second kind of method has higher distance measurement accuracy compared to the first kind. However, due to the limitations of existing LiDAR sensor principles, the point cloud data obtained by LiDAR sensors are very sparse and the information is relatively single, lacking auxiliary information such as color information in images.

The third kind of method combines the advantages of the above two sensors in principle. However, existing methods of fusing LiDAR sensor data and image data have not fully utilized the characteristics of the two sensors, resulting in a detection accuracy slightly lower than that of single laser methods, and the detection speed of the third kind is relatively slow, making it difficult to achieve real-time detection. For example, Rövid, András; Bálint-Benczédi, Ferenc; Burget, Péter. "Towards Raw Sensor Fusion in 3D Object Detection." 2019 IEEE 17th World Symposium on Applied Machine Intelligence and Informatics (SAMI), IEEE, 2019, pp. 293-298. DOI: 10.1109/SAMI.2019.8782779 discloses a sensor fusion method combining LiDAR and RGB image data using a YOLO-based object detector and PointNet for 3D object detection, focusing on augmenting point cloud regions of interest with semantic features derived from bounding boxes.

It should be noted that the information disclosed in the background technology section above is only used to enhance the understanding of the background of the present disclosure, and therefore may include information that does not constitute prior art known to those skilled in the art.

## SUMMARY

The purpose of the present disclosure is to provide a detection method, a system, device, and a storage medium based on fusion of image and point cloud information, to solve the problems in the existing technology. The present disclosure more fully utilizes the point cloud information of the LiDAR and the image information of the camera to achieve real-time 3D target detection with higher accuracy, significantly improves detection accuracy of small targets. The present disclosure increases the speed and accuracy of 3D target recognition, which helps to provide safer and more reliable environmental perception information for unmanned vehicles.

The present invention is directed to a detection method based on fusion of image and point cloud information, including:

S100. jointly calibrating the LiDAR sensor and the image sensor to obtain a conversion matrix from a LiDAR sensor coordinate system to a visual image coordinate system; training a second convolutional neural network with a large number of point cloud information having multi-feature information, wherein the second convolutional neural network is configured to output the category of one or more 3D targets;

S110. synchronously obtaining point cloud information and image information by using the LiDAR sensor and the image sensor;

S120. inputting the image information into a trained first convolutional neural network to extract multi-feature information of each pixel point in the image information, the multi-feature information at least including color information and target identification information of each pixel point;

S130. projecting laser point cloud of the LiDAR sensor onto the image, matching each laser point in the point cloud information to a corresponding pixel point, and then adding the multi-feature information of the pixel point to corresponding point cloud information; wherein converting positions of the laser points in the laser point cloud of the LiDAR sensor into the visual image coordinate system using the conversion matrix, matching the laser points to corresponding pixel points;

S140. inputting the point cloud information having the multi-feature information into the trained second convolutional neural network to detect one or more 3D targets and output a category of each 3D target, a 3D contour of each 3D target and length, width and height dimensions of the 3D contour; wherein, the 3D contour of the 3D target is established based on the point cloud corresponding to the 3D target, and the dimensions of the 3D contour are obtained as the dimensions of the contour of the 3D target;

wherein the step S120 comprises the following steps: S121. inputting the image information into a trained machine vision model for segmenting the image; S122. obtaining target identification information D corresponding to each segmented image area in the image by using the machine vision model; S123. obtaining the multi-feature information of each pixel point, which comprises the RGB information of the pixel point and the target identification information D in the image area where the pixel point is located;

wherein in step S100, taking an origin of the LiDAR sensor as an origin of the LiDAR coordinate system, a forward direction of a vehicle as an $X_L$ axis of the LiDAR coordinate system, a vertically upward direction of the vehicle as a $Z_L$ axis, and a left direction of the vehicle's forward direction as a $Y_L$ axis, the coordinates of the LiDAR coordinate system being $(X_L, Y_L, Z_L)$; taking an optical center of lens of the image sensor as an origin $O_C$ of the camera coordinate system, an optical axis direction as a $Z_C$ axis, a vertically downward direction as a $Y_C$ axis, and a right side direction of the vehicle's forward direction as an $X_C$ axis, the coordinates of the camera coordinate system being $(X_C, Y_C, Z_C)$; wherein the origin of the image coordinate system $(v_x, v_y)$ being located in an upper left corner of the image, using a chessboard calibration board to jointly calibrate the LiDAR sensor and the image sensor to obtain the conversion matrix from the LiDAR sensor to the camera coordinate system:

$$\begin{pmatrix} Xc \\ Yc \\ Zc \end{pmatrix} = T \times \begin{pmatrix} X_L \\ Y_L \\ Z_L \\ 1 \end{pmatrix}$$

wherein T is the conversion matrix of three rows and four columns from the LiDAR sensor to the camera coordinate system, obtained through joint calibration; wherein the pixel point coordinates of the point cloud projected onto the camera imaging plane can be obtained by the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times \begin{pmatrix} Xc \\ Yc \\ Zc \end{pmatrix}$$

wherein, $f_x$ and $f_y$ are focal lengths of the lens on the X and Y axes, and $u_0$ and $v_0$ are the coordinates of the optical center in the camera coordinate system, the conversion relationship from the LiDAR sensor to the image coordinate system is expressed using the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times T \times \begin{pmatrix} X_L \\ Y_L \\ Z_L \\ 1 \end{pmatrix}..$$

In some embodiments, in the step S130, traversing the pixel points in the image, and taking the pixel point having the smallest distance to the position projected by the laser point into the visual image coordinate system as the pixel point matching the laser point.

In some embodiments, after the step S140, the method further includes the following steps:
taking one of a minimum distance in the point cloud, an average distance of the point cloud, or a distance to the center point of the point cloud corresponding to the 3D target as a distance to the 3D target.

The embodiment of the present disclosure further provides a detection system based on fusion of image and point cloud information, wherein the system is used for the detection method, and the system includes:

a synchronous acquisition module configured to synchronously obtain point cloud information and image information by using a LiDAR sensor and an image sensor;
a first network module configured to input the image information into a trained first convolutional neural network to extract multi-feature information of each pixel point in the image information, the multi-feature information at least including color information and target identification information of each pixel point;
a point cloud projection module configured to project laser point cloud of the LiDAR sensor onto the image, match each laser point in the point cloud information to a corresponding pixel point, and then add the multi-feature information of the pixel point to corresponding point cloud information;
a second network module configured to input the point cloud information having the multi-feature information into a trained second convolutional neural network to output a category of each 3D target.

The embodiment of the present disclosure further provides a detection device based on fusion of image and point cloud information including:

a processor;
a memory configured to store executable instructions of the processor;
wherein the processor is configured to execute the steps of the detection method based on fusion of image and point cloud information by executing executable instructions.

The embodiment of the present disclosure further provides a computer-readable storage medium used for storing program, wherein the detection method based on fusion of image and point cloud information is realized when the program is executed.

The detection method, the system, the device, and the storage medium based on fusion of image and point cloud information of the present disclosure can more fully utilize the point cloud information of LiDAR and the image information of camera, and overcome the shortcomings of existing technology that cannot combine a fast recognition speed and high accuracy. The present disclosure realizes real-time 3D target detection with higher accuracy, and significantly improves the detection accuracy of small targets. The present disclosure increases the speed and accuracy of 3D target recognition, which helps to provide safer and more reliable environmental perception information for unmanned vehicles.

BRIEF DESCRIPTION OF THE DRAWINGS

The foregoing and other features, and advantages of the present disclosure are apparent from the following detailed description taken in conjunction with the accompanying drawings in which:

> FIG. 1 is a flow chart of a detection method based on fusion of image and point cloud information according to an embodiment of the present disclosure;
> FIGS. 2-5 are schematic views of implementation process of the detection method based on fusion of image and point cloud information according to the embodiment of the present disclosure;
> FIG. 6 is a structural schematic view of a detection system based on fusion of image and point cloud information according to the embodiment of the present disclosure;
> FIG. 7 is a structural schematic view of a detection device based on fusion of image and point cloud information according to the embodiment of the present disclosure;
> FIG. 8 is a structural schematic view of a computer-readable storage medium according to the embodiment of the present disclosure.

DETAILED DESCRIPTION

In the following, embodiments of the present disclosure will be described in detail with reference to the figures. The concept of the present disclosure can be implemented in a plurality of forms, and should not be understood to be limited to the embodiments described hereafter. In contrary, these embodiments are provided to make the present disclosure more comprehensive and understandable, and so the conception of the embodiments can be conveyed to those skilled in the art fully.

Same reference signs in the figures refer to same or similar elements, so repeated description of them will be omitted.

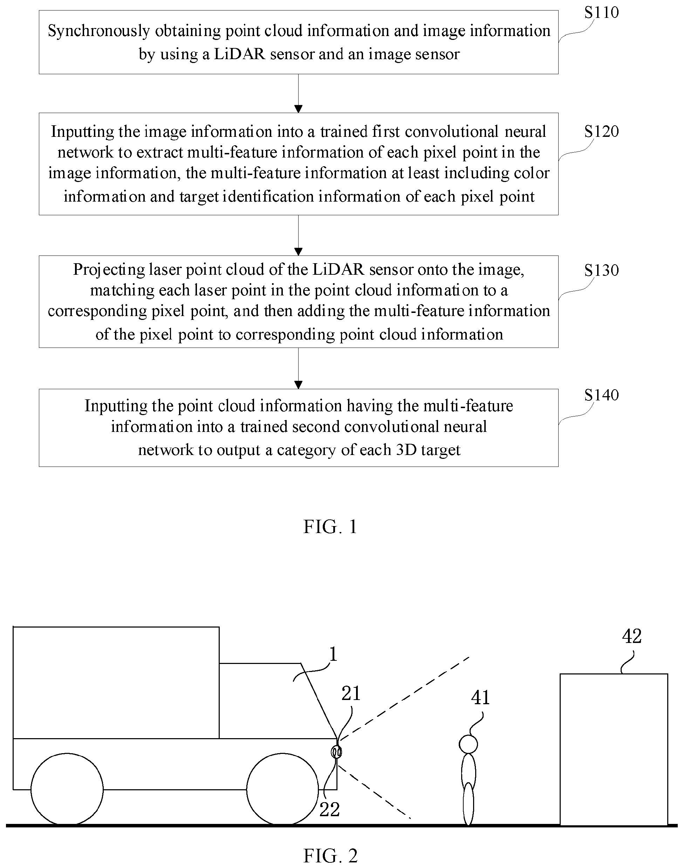

FIG. 1 is a flow chart of a detection method based on fusion of image and point cloud information according to an embodiment of the present disclosure. As shown in FIG. 1, the detection method based on fusion of image and point cloud information of the present disclosure includes the following steps:

> S110. synchronously obtaining point cloud information and image information by using a LiDAR sensor and an image sensor.
> S120. inputting the image information into a trained first convolutional neural network to extract multi-feature information of each pixel point in the image information, the multi-feature information at least including color information and target identification information of each pixel point. The first convolutional neural network uses a machine vision model. As the machine vision model only performs convolution based on image information (RGB information), perform the processes of both image segmentation and identification, the target identification information D here may not be accurate enough.
> S130. projecting laser point cloud of the LiDAR sensor onto the image, matching each laser point in the point cloud information to a corresponding pixel point, and then adding the multi-feature information of the pixel point to corresponding point cloud information.
> S140. inputting the point cloud information having the multi-feature information into a trained second convolutional neural network to output a category of each 3D target. As the second convolutional neural network fully uses the image information (RGB), the point cloud information and the previous obtained target identification information D, 3D targets can be more accurately recognized and the accuracy of 3D target recognition can be ensured.

In some embodiments, before S110, the method further includes the following steps:
S100. jointly calibrating the LiDAR sensor and the image sensor to obtain a conversion matrix from a LiDAR sensor coordinate system to a visual image coordinate system.

In the step S130, converting positions of the laser points in the laser point cloud of the LiDAR sensor into the visual image coordinate system using the conversion matrix, matching the laser points to corresponding pixel points.

In selective embodiments, in the step S130, traversing the pixel points in the image, and taking the pixel point having the smallest distance to the position projected by the laser point into the visual image coordinate system as the pixel point matching the laser point, thereby improving the matching accuracy between the pixel points and the laser points.

In selective embodiments, the step S120 includes the following steps:

S121. inputting the image information into a trained machine vision model for segmenting the image;
S122. obtaining target identification information D corresponding to each segmented image area in the image by using the machine vision model;
S123. obtaining the multi-feature information of each pixel point, which includes the RGB information of the pixel point and the target identification information D in the image area where the pixel point is located. Therefore, the image can be segmented into areas, and primary target identification information D can be obtained. In a selective embodiment, before the step S110, the method further includes: training the second convolutional neural network with a large number of point cloud information having multi-feature information, wherein the second convolutional neural network is configured to output the category of the 3D target.

In selective embodiments, the second convolutional neural network is further configured to output a 3D contour of each 3D target and length, width and height dimensions of the 3D contour.

In selective embodiments, after the step S140, the method further includes the following steps:
taking one of a minimum distance in the point cloud, an average distance of the point cloud, or a distance to the center point of the point cloud corresponding to the 3D target as a distance to the 3D target.

In selective embodiments, after the step S140, the method further includes the following steps:
establishing a 3D contour of the 3D target based on the point cloud corresponding to the 3D target, and obtaining the dimensions of the 3D contour as the dimensions of the contour of the 3D target.

In selective embodiments, in the step S100, an origin of the LiDAR sensor is taken as an origin of the LiDAR coordinate system, a forward direction of a vehicle is taken as an $X_L$ axis of the LiDAR coordinate system, a vertically upward direction of the vehicle is taken as as a $Z_L$ axis, and a left direction of the vehicle's forward direction is taken as a $Y_L$ axis.

An optical center of lens of the image sensor is taken as an origin Oc of the camera coordinate system, an optical axis direction is taken as a $Z_C$ axis, a vertically downward direction is taken as a $Y_C$ axis, and a right side direction of the vehicle's forward direction is taken as an $X_C$ axis.

The origin of the image coordinate system ($v_x$, $v_y$) is located in an upper left corner of the image, a chessboard calibration board is used to jointly calibrate the LiDAR sensor and the image sensor to obtain the conversion matrix from the LiDAR sensor to the camera coordinate system:

$$\begin{pmatrix} Xc \\ Yc \\ Zc \end{pmatrix} = T \times \begin{pmatrix} X_L \\ Y_L \\ Z_L \\ 1 \end{pmatrix}$$

Wherein T is the conversion matrix of three rows and four columns from the LiDAR sensor to the camera coordinate system, obtained through joint calibration, the conversion matrix T includes rotation and translation information, thereby obtaining the 3D coordinates of the LiDAR point cloud in the camera coordinate system. Based on pinhole imaging principle of the camera, the pixel point coordinates of the point cloud projected onto the camera imaging plane can be obtained by the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times \begin{pmatrix} Xc \\ Yc \\ Zc \end{pmatrix}$$

Wherein $f_x$ and $f_y$ are focal lengths of the lens on the X and Y axes, and $u_0$ and $v_0$ are the coordinates of the optical center in the camera coordinate system. Based on the above formula, the conversion relationship from the LiDAR sensor to the image coordinate system is expressed using the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times T \times \begin{pmatrix} X_L \\ Y_L \\ Z_L \\ 1 \end{pmatrix}$$

Using the above formula, the LiDAR point cloud can be projected onto the camera image, thereby matching and fusing the multi-feature information previously extracted from the image with the point cloud information of the LiDAR sensor, and finally obtaining a LiDAR sensor point cloud having the multi-feature information of the image.

The detection method based on fusion of image and point cloud information of the present disclosure can more fully utilize the point cloud information of LiDAR and the image information of camera, and overcome the shortcomings of existing technology that cannot combine a fast recognition speed and high accuracy. The present disclosure realizes real-time 3D target detection with higher accuracy, and significantly improves the detection accuracy of small targets. The present disclosure increases the speed and accuracy of 3D target recognition, which helps to provide safer and more reliable environmental perception information for unmanned vehicles.

FIGS. 2-5 are schematic views of implementation process of the detection method based on fusion of image and point cloud information according to the embodiment of the present disclosure. As shown in FIGS.

2-5, the implementation process of the detection method based on fusion of image and point cloud information according to the embodiment includes: firstly, installing the LiDAR sensor 22 and the image sensor 21 on an unmanned truck 1, the LiDAR sensor 22 and the image sensor 21 being parallel to each other or having a certain angle therebetween; jointly calibrating the LiDAR sensor 22 and the image sensor 21 installed on the unmanned truck 1, to obtain the conversion matrix from the LiDAR sensor coordinate system to the visual image coordinate system.

An origin of the LiDAR sensor is taken as an origin of the LiDAR coordinate system, a forward direction of a vehicle is taken as an $X_L$ axis of the LiDAR coordinate system, a vertically upward direction of the vehicle is taken as a $Z_L$ axis, and a left direction of the vehicle's forward direction is taken as a $Y_L$ axis, so the coordinates of the LiDAR coordinate system are ($X_L$, $Y_L$, $Z_L$).

An optical center of lens of the image sensor is taken as an origin Oc of the camera coordinate system, an optical axis direction is taken as a $Z_C$ axis, a vertically downward direction is taken as a $Y_C$ axis, and a right side direction of the vehicle's forward direction is taken as an $X_C$ axis, so the coordinates of the camera coordinate system are ($X_C$, $Y_C$, $Z_C$);

The origin of the image coordinate system ($v_x$, $v_y$) is located in an upper left corner of the image, a chessboard calibration board is used to jointly calibrate the LiDAR sensor and the image sensor to obtain the conversion matrix from the LiDAR sensor to the camera coordinate system:

$$\begin{pmatrix} Xc \\ Yc \\ Zc \end{pmatrix} = T \times \begin{pmatrix} X_L \\ Y_L \\ Z_L \\ 1 \end{pmatrix}$$

Wherein T is the conversion matrix of three rows and four columns from the LiDAR sensor to the camera coordinate system, obtained through joint calibration.

The pixel point coordinates of the point cloud projected onto the camera imaging plane can be obtained by the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times \begin{pmatrix} Xc \\ Yc \\ Zc \end{pmatrix}$$

wherein, $f_x$ and $f_y$ are focal lengths of the lens on the X and Y axes, and $u_0$ and $v_0$ are the coordinates of the optical center in the camera coordinate system, the conversion relationship from the LiDAR sensor to the image coordinate system is expressed using the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times T \times \begin{pmatrix} X_L \\ Y_L \\ Z_L \\ 1 \end{pmatrix}.$$

The conversion matrix from the LiDAR sensor coordinate system to the visual image coordinate system can also be obtained by using other calibration methods, without being limited by this.

In addition, the first convolutional neural network is trained by learning a large number of photos with segmented areas and target identifications, so that the first convolutional neural network can automatically segment the input photos into areas, recognize each area separately, and output target identification information for each area. The second convolutional neural network is trained by learning a large number of point cloud information with multi-feature information, so that the second convolutional neural network can accurately output the categorie of each 3D target. In the present disclosure, the difference between training the first convolutional neural network and the second convolutional neural network is that the first convolutional neural network has the functions of image segmentation and primary image recognition, while the second convolutional neural network has no function of image segmentation compared with the first convolutional neural network, and only has the function of accurate recognition for areas.

Referring to FIG. 2, the calibrated LiDAR sensor 22 and image sensor 21 on the unmanned truck 1 were used to synchronously obtain point cloud information and image information. At this time, a first obstacle 41 and a second obstacle 42 are located on the road surface 43 in front of the unmanned truck 1.

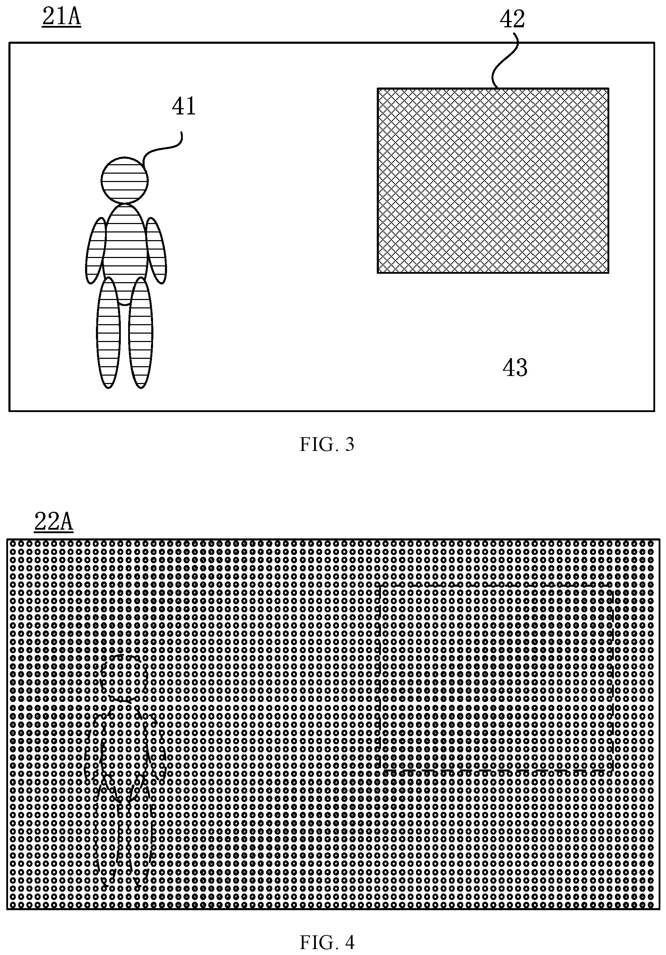

Then, referring to FIG. 3, the image information is input into the trained first convolutional neural network to extract the multi-feature information of each pixel point in the image information, the multi-feature at least includes the color information of each pixel point and target identification information of the area where the pixel point is located. In this embodiment, the image is segmented by inputting the image information into the trained machine vision model. The target identification information D corresponding to each segmented image area in the image is obtained through the machine vision model. The multi-feature information of each pixel point includes the RGB information of the pixel point and the target identification information D in the image area where the pixel point is located. The multi-feature information of each pixel point is (R, G, B, D). The image sensor 21 obtains the image information schematic view 21A, which includes the area of the first obstacle 41, the area of the second obstacle 42, and the area of the road surface 43. The target identification information D of each pixel point in the area of the first obstacle 41 is pedestrian, and the multi-feature information of each pixel point in the area is (R, G, B, pedestrian). The target identification information D of each pixel point in the area of the second obstacle 42 is wall, and the multi-feature information of each pixel point in the area is (R, G, B, wall). The target identification information D of each pixel point in the area of road surface 43 is ground, and the multi-feature information of each pixel point in this area is (R, G, B, ground).

Referring to FIG. 4, the LiDAR sensor 22 obtains a point cloud information schematic view 22A. Each circular pattern in FIG. 4 is a laser point. Similarly, the point cloud information schematic view 22A also includes the first obstacle, the second obstacle, and the road surface.

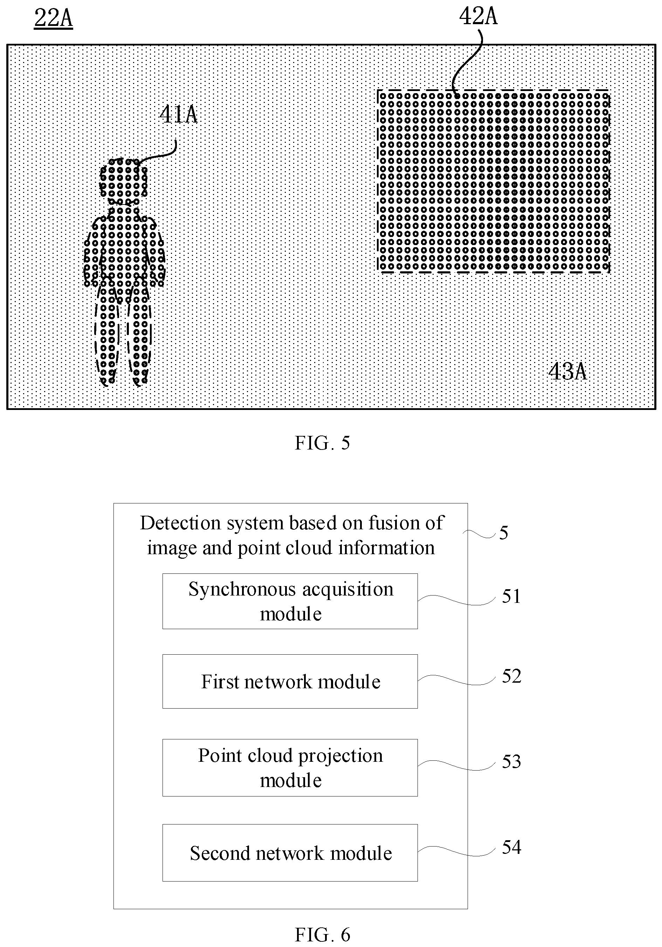

Referring to FIG. 5, the laser point cloud of the LiDAR sensor is projected onto the image using the conversion matrix from the LiDAR sensor coordinate system to the visual image coordinate system. Each laser point in the point cloud information is matched to a corresponding pixel point, and then the multi-feature information of the pixel point is added to the corresponding point cloud information. The position of the laser point cloud of the LiDAR sensor is converted into the visual image coordinate system through the conversion matrix to match the corresponding pixel points. For example, by traversing the pixel points of the image, the pixel point with the smallest distance from the position projected by a laser point into the visual image coordinate system is taken as the pixel point matching with the laser point. In this embodiment, the multi-feature information of all laser points in area 41A of the first obstacle in the point cloud is (R, G, B, pedestrian). The multi-feature information of all laser points in area 42A of the second obstacle in the point cloud is (R, G, B, wall). The multi-feature information of all laser points in area 43A of the road surface in the point cloud is (R, G, B, ground).

Then, the point cloud information with multi-feature information is input into the trained second convolutional neural network to output the category of each 3D target. Because the second convolutional neural network has been trained by a large number of point cloud information with multi-feature information, unlike the first convolutional neural network with complex functions, the second convolutional neural network has higher accuracy of label classification. In addition, the second convolutional neural network uses the primary target identification information D in the multi-feature information with a weight. In some cases, the second convolutional neural network obtains the category of 3D targets different from the target identification information D, improving the accuracy of 3D target recognition.

Finally, one of the minimum distance in the point cloud, the average distance of the point cloud, or the distance to the center point of the point cloud corresponding to each 3D target is taken as the distance from the 3D target. Therefore, it is determined that the current distance between the pedestrian and the unmanned truck 1 is 2 meters, and the current distance between the wall and the unmanned truck 1 is 4 meters. In addition, the 3D contour of the 3D target is established based on the point cloud corresponding to the 3D target, and the dimensions of the 3D contour are obtained as the dimensions of the 3D target contour. For example, the 3D range of the point cloud can be processed with trigonometric functions calculation or other existing technologies, then the height of the pedestrian is determined as 1.8 meters from the 3D range of the point cloud corresponding to the pedestrian, and the width of the wall is determined as 4 meters and the height of the wall is determined as 3 meters through the three-dimensional range of the point cloud corresponding to the wall. The present disclosure is not the limit.

In selective embodiments, the second convolutional neural network is further configured to output a 3D contour of each 3D target and length, width and height dimensions of the 3D contour.

FIG. 6 is a structural schematic view of a detection system based on fusion of image and point cloud information according to the embodiment of the present disclosure. As shown in FIG. 6, the present disclosure further provides a detection system 5 based on fusion of image and point cloud information, wherein the system is used for the above detection method based on fusion of image and point cloud information, and the system includes:

a synchronous acquisition module 51 configured to synchronously obtain point cloud information and image information by using a LiDAR sensor and an image sensor;
a first network module 52 configured to input the image information into a trained first convolutional neural network to extract multi-feature information of each pixel point in the image information, the multi-feature information at least including color information and target identification information of each pixel point;
a point cloud projection module 53 configured to project laser point cloud of the LiDAR sensor onto the image, match each laser point in the point cloud information to a corresponding pixel point, and then add the multi-feature information of the pixel point to corresponding point cloud information;
a second network module 54 configured to input the point cloud information having the multi-feature information into a trained second convolutional neural network to output a category of each 3D target.

The detection system based on fusion of image and point cloud information of the present disclosure can more fully utilize the point cloud information of LiDAR and the image information of camera, and overcome the shortcomings of existing technology that cannot combine a fast recognition speed and high accuracy. The present disclosure realizes real-time 3D target detection with higher accuracy, and significantly improves the detection accuracy of small targets. The present disclosure increases the speed and accuracy of 3D target recognition, which helps to provide safer and more reliable environmental perception information for unmanned vehicles.

The present disclosure further provides a detection device based on fusion of image and point cloud information including: a processor; a memory configured to store executable instructions of the processor. Wherein the processor is configured to execute the steps of the detection method based on fusion of image and point cloud information by executing executable instructions.

The detection device based on fusion of image and point cloud information of the present disclosure can more fully utilize the point cloud information of LiDAR and the image information of camera, and overcome the shortcomings of existing technology that cannot combine a fast recognition speed and high accuracy. The present disclosure realizes real-time 3D target detection with higher accuracy, and significantly improves the detection accuracy of small targets. The present disclosure increases the speed and accuracy of 3D target recognition, which helps to provide safer and more reliable environmental perception information for unmanned vehicles.

Those skilled in the art can understand that various aspects of the present disclosure can be implemented as a system, a method, or a program product. Therefore, various aspects of the present disclosure may be specifically implemented in the form of: a complete hardware implementation, a complete software implementation (including firmware, microcode, etc.), or a combination of hardware and software implementations, which may be collectively referred to herein as "circuit", "module" or "system".

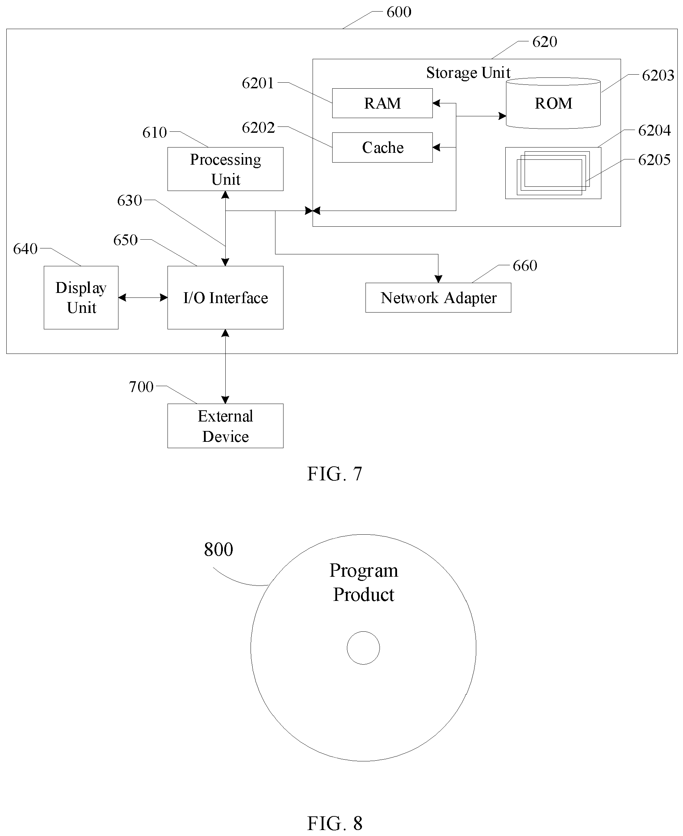

FIG. 7 is a structural schematic view of a detection device based on fusion of image and point cloud information according to the embodiment of the present disclosure. The electronic device 600 according to this embodiment of the present disclosure will be described below with reference to FIG. 7. The electronic device 600 shown in FIG. 7 is only an example, and should not imply any limitation to the functions and usage scope of the embodiments of the present disclosure.

As shown in FIG. 7, the electronic device 600 is represented in the form of a general-purpose computing device. The components of the electronic device 600 may include, but are not limited to: at least one processing unit 610, at least one storage unit 620, and a bus 630 connecting different system components (including the storage unit 620 and the processing unit 610).

In an embodiment, the storage unit stores program codes which, when being executed by the processing unit 610, causes the processing unit 610 to implement steps of various exemplary embodiments described in the forgoing part describing the detection method based on fusion of image and cloud information of the description. For example, the processing unit 610 may be configured to perform, as shown in FIG. 1.

The storage unit 620 may include a readable medium in the form of a transitory storage unit, such as a random access storage unit (RAM) 6201 and/or a high-speed cache storage unit 6202, and may further include a read-only storage unit (ROM) 6203.

The storage unit 620 may further include a program/utility tool 6204 having a set of (at least one) program module 6205. Such program module 6205 includes, but not limited to, an operating system, one or more application programs, other program modules, and program data. Each of these examples or some combination thereof may include an implementation of network environment.

The bus 630 may be one or more of several types of bus structures, including a storage unit bus or a storage unit controller, a peripheral bus, a graphics acceleration port, a processing unit, or a local area using any of a variety of bus structures bus.

The electronic device 600 may also communicate with one or more external devices 700 (e.g., keyboard, pointing device, Bluetooth device, etc.), and may also communicate with one or more devices that enable a user to interact with the electronic device 600, and/or any device (e.g., router, modem, etc.) that enables the electronic device 600 to communicate with one or more other computing devices. This communication can be performed through an input/output (I/O) interface 650. Moreover, the electronic device 600 can also communicate with one or more networks (e.g., local area network (LAN), a wide area network (WAN), and/or a public network such as the Internet) through a network adapter 660. As shown in the drawing, the network adapter 660 communicates with other modules of the electronic device 600 through the bus 630. It should be understood that, although not shown in the drawing, other hardware and/or software modules may be used in conjunction with the electronic device 600, including but not limited to, microcode, device driver, redundant processing unit, external disk drive array, RAID system, tape driver and data backup storage system.

The embodiment of the present disclosure further provides a computer-readable storage medium on which a program product capable of implementing the above method of the disclosure is stored. In some possible implementation manners, various aspects of the present disclosure may also be implemented in the form of a program product, including program code which, when being executed by a terminal device, causes the terminal device to implement steps of various exemplary embodiments described in the forgoing detection method based on fusion of image and point cloud information.

When the program in the computer-readable storage medium is executed, the point cloud information of LiDAR and the image information of camera can be fully utilized, and the shortcomings of existing technology that cannot combine a fast recognition speed and high accuracy can be overcome. The present disclosure realizes real-time 3D target detection with higher accuracy, and significantly improves the detection accuracy of small targets. The present disclosure increases the speed and accuracy of 3D target recognition, which helps to provide safer and more reliable environmental perception information for unmanned vehicles.

FIG. 8 is a structural schematic view of a computer-readable storage medium according to the embodiment of the present disclosure. Referring to FIG. 8, a program product 800 for implementing the above method according to an embodiment of the present disclosure is described. It may be implemented using a portable compact disk read-only memory (CD-ROM) and include a program code, and may be executed by a terminal device, for example, a personal computer. However, the program product of the present disclosure is not limited thereto. In the present disclosure, the readable storage medium may be any tangible medium containing or storing a program, which may be used by or in combination with an instruction execution system, apparatus, or device.

The program product may employ any combination of one or more readable medium. The readable medium may be a readable signal medium or a readable storage medium. The readable storage medium may be, for example but not limited to, an electrical, magnetic, optical, electromagnetic, infrared, or semiconductor system, apparatus, or device, or any combination thereof. More specific examples of readable storage medium (non-exhaustive list) may include: electrical connections with one or more wires, portable disks, hard disks, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

The computer-readable signal medium may include a data signal that is transmitted in baseband or as part of a carrier wave, in which readable program code is carried. This transmitted data signal can take many forms, including but not limited to electromagnetic signals, optical signals, or any suitable combination of the above. The readable signal medium may also be any readable medium other than a readable storage medium, and the readable medium may send, propagate, or transmit a program for use by or in combination with an instruction execution system, apparatus, or device. The program code contained on the readable medium may be transmitted using any appropriate medium, including but not limited to wireless, wired, optical fiber cable, RF, etc., or any suitable combination of the foregoing.

The program code for performing the operations of the present disclosure may be written in any combination of one or more programming languages, which may include a target-oriented programming language, such as the Java and C++, or may include conventional formula programming language, such as "C" language or similar programming language. The program code may be entirely executed on the user computing device, partly executed on the user device, executed as an independent software package, partly executed on the user computing device and partly executed on a remote computing device, or entirely executed on the remote computing device or server. In situations involving a remote computing device, the remote computing device may be connected to the user computing device through any kind of network, including a local area network (LAN) or a wide area network (WAN), or may be connected to an external computing device (e.g., through connection via the Internet using Internet service provider).

Above all, the detection method, system, device, and storage medium based on fusion of image and point cloud information of the present disclosure can more fully utilize the point cloud information of LiDAR and the image information of camera, and overcome the shortcomings of existing technology that cannot combine a fast recognition speed and high accuracy. The present disclosure realizes real-time 3D target detection with higher accuracy, and significantly improves the detection accuracy of small targets. The present disclosure increases the speed and accuracy of 3D target recognition, which helps to provide safer and more reliable environmental perception information for unmanned vehicles.

The above is a detailed description of the present disclosure in connection with the specific preferred embodiments, and the specific embodiments of the present disclosure are not limited to the description. Modifications and substitutions can be made without departing from the scope of the appended claims.

## Claims

1. A detection method based on fusion of image and point cloud information comprising:

   S100. jointly calibrating a LiDAR sensor and an image sensor to obtain a conversion matrix from a LiDAR sensor coordinate system to a visual image coordinate system; training a second convolutional neural network with a large number of point cloud information having multi-feature information, wherein the second convolutional neural network is configured to output the category of one or more 3D targets;
   S110. synchronously obtaining point cloud information and image information by using the LiDAR sensor and the image sensor;
   S120. inputting the image information into a trained first convolutional neural network to extract multi-feature information of each pixel point in the image information, the multi-feature information at least comprising color information and target identification information of each pixel point;
   S130. projecting laser point cloud of the LiDAR sensor onto the image, matching each laser point in the point cloud information to a corresponding pixel point, and then adding the multi-feature information of the pixel point to corresponding point cloud information; wherein converting positions of the laser points in the laser point cloud of the LiDAR sensor into the visual image coordinate system using the conversion matrix, matching the laser points to corresponding pixel points;

S140. inputting the point cloud information having the multi-feature information into the trained second convolutional neural network to detect one or more 3D targets, and output a category of each 3D target, a 3D contour of each 3D target and length, width and height dimensions of the 3D contour; wherein, the 3D contour of the 3D target is established based on the point cloud corresponding to the 3D target, and the dimensions of the 3D contour are obtained as the dimensions of the contour of the 3D target;

wherein the step S120 comprises the following steps:

S121. inputting the image information into a trained machine vision model for segmenting the image;

S122. obtaining target identification information D corresponding to each segmented image area in the image by using the machine vision model;

S123. obtaining the multi-feature information of each pixel point, which comprises the RGB information of the pixel point and the target identification information D in the image area where the pixel point is located;

wherein in step S100,

taking an origin of the LiDAR sensor as an origin of the LiDAR coordinate system, a forward direction of a vehicle as an $X_L$ axis of the LiDAR coordinate system, a vertically upward direction of the vehicle as a $Z_L$ axis, and a left direction of the vehicle's forward direction as a $Y_L$ axis, the coordinates of the LiDAR coordinate system being $(X_L, Y_L, Z_L)$;

taking an optical center of lens of the image sensor as an origin $O_C$ of the camera coordinate system, an optical axis direction as a $Z_C$ axis, a vertically downward direction as a $Y_C$ axis, and a right side direction of the vehicle's forward direction as an $X_C$ axis, the coordinates of the camera coordinate system being $(X_C, Y_C, Z_C)$;

wherein the origin of the image coordinate system $(v_x, v_y)$ is located in an upper left corner of the image, using a chessboard calibration board to jointly calibrate the LiDAR sensor and the image sensor to obtain the conversion matrix from the LiDAR sensor to the camera coordinate system:

$$\begin{pmatrix} Xc \\ Yc \\ Zc \end{pmatrix} = T \times \begin{pmatrix} X_L \\ Y_L \\ Z_L \\ 1 \end{pmatrix}$$

wherein T is the conversion matrix of three rows and four columns from the LiDAR sensor to the camera coordinate system, obtained through joint calibration;

wherein the pixel point coordinates of the point cloud projected onto the camera imaging plane can be obtained by the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times \begin{pmatrix} Xc \\ Yc \\ Zc \end{pmatrix}$$

wherein, $f_x$ and $f_y$ are focal lengths of the lens on the X and Y axes, and $u_0$ and $v_0$ are the coordinates of the optical center in the camera coordinate system, the conversion relationship from the LiDAR sensor to the image coordinate system is expressed using the following formula:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times T \times \begin{pmatrix} X_L \\ Y_L \\ Z_L \\ 1 \end{pmatrix}.$$

2. The detection method according to claim 1, wherein in the step S130, traversing the pixel points in the image, and taking the pixel point having the smallest distance to the position projected by the laser point into the visual image coordinate system as the pixel point matching the laser point.

3. The detection method according to claim 1, wherein after the step S140, the method further comprises the following steps:
taking one of a minimum distance in the point cloud, an average distance of the point cloud, or a distance to the center point of the point cloud corresponding to the 3D target as a distance to the 3D target.

4. A detection system based on fusion of image and point cloud information, wherein the system is configured for the detection method according to claim 1, and the system comprises:

a synchronous acquisition module configured to synchronously obtain point cloud information and image information by using a LiDAR sensor and an image sensor;
a first network module configured to input the image information into a trained first convolutional neural network to extract multi-feature information of each pixel point in the image information, the multi-feature information at least comprising color information and target identification information of each pixel point;

a point cloud projection module configured to project laser point cloud of the LiDAR sensor onto the image, match each laser point in the point cloud information to a corresponding pixel point, and then add the multi-feature information of the pixel point to corresponding point cloud information;

a second network module configured to input the point cloud information having the multi-feature information into a trained second convolutional neural network to output a category of each 3D target.

5. A detection device based on fusion of image and point cloud information comprising:

a processor;

a memory configured to store executable instructions of the processor;

wherein the processor is configured to execute the steps of the detection method based on fusion of image and point cloud information according to any one of claims 1 to 3 by executing executable instructions.

6. A computer-readable storage medium used for storing program, wherein the detection method based on fusion of image and point cloud information according to any one of claims 1 to 3 is realized when the program is executed.

**Patentansprüche**

1. Detektionsverfahren, das auf einer Verschmelzung von Bild- und Punktwolkeninformationen beruht, wobei es Folgendes umfasst:

S100. Gemeinsames Kalibrieren eines LiDAR-Sensors und eines Bildsensors, um eine Umwandlungsmatrix von einem LiDAR-Sensor-Koordinatensystem zu einem Koordinatensystem eines Sichtbildes zu erhalten; Trainieren eines zweiten Convolutional Neural Network mit einer großen Anzahl an Punktwolkeninformationen, die Informationen zu mehreren Merkmalen aufweisen; wobei das zweite Convolutional Neural Network dafür ausgelegt ist, die Kategorie eines oder mehrerer 3D-Zielelemente auszugeben;

S110. Erhalten, auf synchrone Weise, von Punktwolkeninformationen und Bildinformationen durch Verwendung des LiDAR-Sensors und des Bildsensors;

S120. Eingeben der Bildinformationen in ein trainiertes erstes Convolutional Neural Network, um Informationen zu mehreren Merkmalen aus jedem der Pixelpunkte in den Bildinformationen zu extrahieren, wobei die Informationen zu mehreren Merkmalen für jeden der Pixelpunkte zumindest Farbinformationen und Informationen zur Zielelementerkennung umfassen;

S130. Projizieren einer Laserpunktwolke des LiDAR-Sensors auf das Bild, wobei jeder Laserpunkt in den Punktwolkeninformationen mit einem entsprechenden Pixelpunkt gepaart wird, um anschließend die Informationen zu mehreren Merkmalen des Pixelpunkts zu den entsprechenden Punktwolkeninformationen hinzuzufügen; wobei die Positionen der Laserpunkte in der Laserpunktwolke des LiDAR-Sensors unter Verwendung der Umwandlungsmatrix in das Koordinatensystem eines Sichtbildes umgewandelt werden, wobei die Laserpunkte mit den entsprechenden Pixelpunkten gepaart werden;

S140. Eingeben der Punktwolkeninfomationen, welche die Informationen zu mehreren Merkmalen aufweisen, in das trainierte zweite Convolutional Neural Network, um ein oder mehrere 3D-Zielelemente zu detektieren, und um eine Kategorie jedes der 3D-Zielelemente, eine 3D-Kontur jedes der 3D-Zielelemente sowie die Längen-, Breitenund Höhenabmessungen der 3D-Kontur auszugeben; wobei die 3D-Kontur des 3D-Zielelements auf Grundlage der Punktwolke erstellt wird, welche dem 3D-Zielelement entspricht, und die Abmessungen der 3D-Kontur als Abmessungen der Kontur des 3D-Zielelement erhalten werden;

wobei der Schritt S120 die folgenden Schritte umfasst:

S121. Eingeben der Bildinformationen in ein trainiertes Maschinensichtmodell zum Segmentieren des Bildes;

S122. Erhalten von Informationen D zur Zielelementerkennung, die jedem der segmentierten Bildbereiche in dem Bild entsprechen, durch Anwendung des Maschinensichtmodells;

S123. Erhalten der Informationen zu mehreren Merkmalen für jeden der Pixelpunkte, wobei diese die RGB-Informationen des Pixelpunktes und die Informationen D zur Zielelementerkennung in dem Bildbereich umfassen, in welchem sich der Pixelpunkt befindet;

wobei im Schritt S100

ein Ursprung des LiDAR-Sensors als Ursprung des LiDAR-Koordinatensystems, eine Vorwärtsrichtung eines Fahrzeugs als $X_L$-Achse des LiDAR-Koordinatensystems, eine vertikale Aufwärtsrichtung des Fahrzeugs als $Z_L$-Achse, und Linksrichtung der Vorwärtsrichtung des Fahrzeugs als $Y_L$-Achse herangezogen werden; wobei ($X_L$, $Y_L$, $Z_L$) die Koordinaten des LiDAR-Koordinatensystems darstellen;

ein optisches Zentrum der Linse des Bildsensors als Ursprung Oc des Kamera-Koordinatensystems, eine optische Achsenrichtung als $Z_C$-Achse, eine vertikale Abwärtsrichtung als $Y_C$-Achse, und eine rechte Seitenrichtung der Vorwärtsrichtung des Fahrzeugs als Xc-Achse herangezogen werden, wobei (Xc, Yc, Zc) die Koordinaten des Kamera-Koordinatensystems darstellen;

wobei der Ursprung des Bildkoordinatensystems ($v_x$, $v_y$) sich in einer oberen linken Ecke des Bildes befindet, wobei ein schachbrettartiges Kalibrierbrett dazu verwendet wird, den LiDAR-Sensor und den Bildsensor gemeinsam zu kalibrieren, um die Umwandlungsmatrix vom LiDAR-Sensor zum Kamera-Koordinatensystem zu erhalten:

$$\begin{pmatrix} Xc \\ Yc \\ Zc \end{pmatrix} = T \times \begin{pmatrix} X_L \\ Y_L \\ Z_L \\ 1 \end{pmatrix}$$

wobei T die Umwandlungsmatrix aus drei Reihen und vier Spalten vom LiDAR-Sensor zum Kamera-Koordinatensystem ist, wobei sie durch gemeinsame Kalibrierung erhalten wurde;

wobei die Pixelpunktkoordinaten der Punktwolke, welche auf die Bildgebungsebene der Kamera projiziert wird, mittels der folgenden Formel erhalten werden können:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times \begin{pmatrix} Xc \\ Yc \\ Zc \end{pmatrix}$$

wobei $f_x$ and $f_y$ die Brennweiten der Linse entlang der Achsen X und Y sind, und $u_0$ und $v_0$ die Koordinaten des optischen Zentrums im Kamerakoordinatensystem sind, wobei die Umwandlungsbeziehung vom LiDAR-Sensor zum Bildkoordinatensystems unter Anwendung der folgenden Formel ausgedrückt wird:

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times T \times \begin{pmatrix} X_L \\ Y_L \\ Z_L \\ 1 \end{pmatrix}.$$

2. Detektionsverfahren gemäß Anspruch 1, wobei im Schritt S130 die Pixelpunkte in dem Bild durchlaufen werden und die Pixelpunkte, welche den geringsten Abstand zu der Position haben, welche von dem Laserpunkt in das Sichtbild-Koordinatensystem projiziert wird, als Pixelpunkt herangezogen wird, der mit dem Laserpunkt gepaart ist.

3. Detektionsverfahren gemäß Anspruch 1, wobei das Verfahren nach dem Schritt S140 die folgenden Schritte umfasst:
Heranziehen des geringstmöglichen Abstands in der Punktwolke, eines durchschnittlichen Abstands der Punktwolke oder eines Abstands vom Mittelpunkt der Punktwolke, welche dem 3D-Zielelement entspricht, als Abstand zum 3D-Zielelement.

4. Detektionssystem, das auf einer Verschmelzung von Bild- und Punktwolkeninformationen beruht, wobei das System für das Detektionsverfahren gemäß Anspruch 1 ausgelegt ist, und das System Folgendes umfasst:

ein Modul zur synchronen Erfassung, das dafür ausgelegt ist, auf synchrone Weise Punktwolkeninformationen und Bildinformationen durch Verwendung eines LiDAR-Sensors und eines Bildsensors zu erhalten;
ein erstes Netzwerkmodul, das dafür ausgelegt ist, Bildinformationen in ein trainiertes erstes Convolutional Neural Network einzugeben, um Informationen zu mehreren Merkmalen aus jedem der Pixelpunkte in den Bildinformationen zu extrahieren, wobei die Informationen zu mehreren Merkmalen für jeden der Pixelpunkte zumindest Farbinformationen und Informationen zur Zielelementerkennung umfassen;
ein Modul zur Punktwolkenprojektion, das dafür ausgelegt ist, eine Laserpunktwolke des LiDAR-Sensors auf das Bild zu projizieren, wobei jeder Laserpunkt in den Punktwolkeninformationen mit einem entsprechenden Pixelpunkt gepaart wird, um anschließend die Informationen zu mehreren Merkmalen des Pixelpunkts zu den entsprechenden Punktwolkeninformationen hinzuzufügen;
ein zweites Netzwerkmodul, das dafür ausgelegt ist, die Punktwolkeninformationen, welche die Informationen zu mehreren Merkmalen aufweisen, in das Convolutional Neural Network einzugeben, um für jedes der 3D-Zielelemente eine Kategorie auszugeben.

5. Detektionsvorrichtung, die auf einer Verschmelzung von Bild- und Punktwolkeninformationen beruht, wobei sie Folgendes umfasst:

einen Prozessor;

einen Speicher, der dafür ausgelegt ist, ausführbare Befehle des Prozessors zu speichern; wobei der Prozessor dafür ausgelegt ist, die Schritte des Detektionsverfahrens, welches auf einer Verschmelzung von Bild- und Punktwolkeninformationen beruht und einem beliebigen der Ansprüche 1 bis 3 entspricht, derart auszuführen, dass ausführbare Befehle ausgeführt werden.

6. Maschinenlesbares Speichermedium, das zur Speicherung eines Programms verwendet wird, wobei das Detektionsverfahren, welches auf einer Verschmelzung von Bild- und Punktwolkeninformationen beruht und einem beliebigen der Ansprüche 1 bis 3 entspricht, umgesetzt wird, wenn das Programm ausgeführt wird.

**Revendications**

1. Procédé de détection basé sur une fusion d'informations d'image et de nuage de points, comprenant les étapes consistant à :

S100. étalonner conjointement un capteur LiDAR et un capteur d'image pour obtenir une matrice de conversion à partir d'un système de coordonnées de capteur LiDAR en un système de coordonnées d'image visuelle ; entraîner un second réseau neuronal convolutif avec un grand nombre d'informations de nuage de points présentant des informations multi-caractéristiques, dans lequel le second réseau neuronal convolutif est configuré pour délivrer en sortie la catégorie d'une ou plusieurs cibles 3D ;
S110. obtenir de manière synchrone des informations de nuage de points et des informations d'image en utilisant le capteur LiDAR et le capteur d'image
S120. entrer les informations d'image dans un premier réseau neuronal convolutif entraîné pour extraire des informations multi-caractéristiques de chaque point de pixel dans les informations d'image, les informations multi-caractéristiques comprenant au moins des informations de couleur et des informations d'identification de cible de chaque point de pixel ;
S130. projeter un nuage de points laser du capteur LiDAR sur l'image, faire correspondre chaque point laser dans les informations de nuage de points à un point de pixel correspondant, puis ajouter les informations multi-caractéristiques du point de pixel aux informations de nuage de points correspondantes ; y compris convertir des positions des points laser dans le nuage de points laser du capteur LiDAR en le système de coordonnées d'image visuelle en utilisant la matrice de conversion, et faire correspondre les points laser aux points de pixel correspondants ;
S140. entrer les informations de nuage de points présentant les informations multi-caractéristiques dans le second réseau neuronal convolutif entraîné pour détecter une ou plusieurs cibles 3D, et délivrer en sortie une catégorie de chaque cible 3D, un contour 3D de chaque cible 3D et des dimensions en longueur, largeur et hauteur du contour 3D ; dans lequel, le contour 3D de la cible 3D est établi sur la base du nuage de points correspondant à la cible 3D, et les dimensions du contour 3D sont obtenues en tant que dimensions du contour de la cible 3D ;

dans lequel l'étape S120 comprend les étapes suivantes :

S121. entrer les informations d'image dans un modèle de vision artificielle entraîné pour segmenter l'image ;
S122. obtenir des informations d'identification de cible D correspondant à chaque zone d'image segmentée dans l'image en utilisant le modèle de vision artificielle ;
S123. obtenir les informations multi-caractéristiques de chaque point de pixel, qui comprennent les informations RVB du point de pixel et les informations d'identification de cible D dans la zone d'image où le point de pixel est situé ;
dans lequel à l'étape S100,
prendre une origine du capteur LiDAR comme origine du système de coordonnées LiDAR, une direction vers l'avant d'un véhicule comme axe $X_L$ du système de coordonnées LiDAR, une direction verticalement vers le haut du véhicule comme axe $Z_L$, et une direction vers la gauche de la direction vers l'avant du véhicule comme axe $Y_L$, les coordonnées du système de coordonnées LiDAR étant ($X_L$, $Y_L$, $Z_L$) ;
prendre un centre optique de la lentille du capteur d'image comme origine Oc du système de coordonnées de caméra, une direction d'axe optique comme axe $Z_C$, une direction verticalement vers le bas comme axe $Y_C$ et une direction latérale vers la droite de la direction vers l'avant du véhicule comme axe $X_C$, les coordonnées du système de coordonnées de caméra étant ($X_C$, $Y_C$, $Z_C$) ;
dans lequel l'origine du système de coordonnées d'image ($v_x$, $v_y$) est située dans un coin supérieur gauche de l'image, en utilisant une carte d'étalonnage d'échiquier pour étalonner conjointement le capteur LiDAR et le capteur d'image afin d'obtenir la matrice de conversion du capteur LiDAR au système de coordonnées de caméra :

$$\begin{pmatrix} Xc \\ Yc \\ Zc \end{pmatrix} = T \times \begin{pmatrix} X_L \\ Y_L \\ Z_L \\ 1 \end{pmatrix}$$

dans lequel T est la matrice de conversion de trois lignes et quatre colonnes du capteur LiDAR au système de coordonnées de caméra, obtenue par étalonnage conjoint ;

dans lequel les coordonnées de point de pixel du nuage de points projeté sur le plan d'imagerie de caméra peuvent être obtenues par la formule suivante :

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times \begin{pmatrix} Xc \\ Yc \\ Zc \end{pmatrix}$$

dans lequel, $f_x$ et $f_y$ sont les longueurs focales de la lentille sur les axes X et Y, et $u_0$ et $v_0$ sont les coordonnées du centre optique dans le système de coordonnées de caméra, la relation de conversion du capteur LiDAR au système de coordonnées d'image est exprimée à l'aide de la formule suivante :

$$Z_c \begin{pmatrix} v_x \\ v_y \\ 1 \end{pmatrix} = \begin{pmatrix} f_x & 0 & u_0 \\ 0 & f_y & v_0 \\ 0 & 0 & 1 \end{pmatrix} \times T \times \begin{pmatrix} X_L \\ Y_L \\ Z_L \\ 1 \end{pmatrix}.$$

2. Procédé de détection selon la revendication 1, dans lequel à l'étape S130, traverser les points de pixel dans l'image, et prendre le point de pixel présentant la plus petite distance par rapport à la position projetée par le point laser dans le système de coordonnées d'image visuelle en tant que point de pixel correspondant au point laser.

3. Procédé de détection selon la revendication 1, dans lequel, après l'étape S140, le procédé comprend en outre l'étape suivante consistant à :
   prendre l'une d'une distance minimale dans le nuage de points, d'une distance moyenne du nuage de points ou d'une distance par rapport au point central du nuage de points correspondant à la cible 3D en tant que distance par rapport à la cible 3D.

4. Système de détection basé sur la fusion d'informations d'image et de nuage de points, dans lequel le système est configuré pour le procédé de détection selon la revendication 1, et le système comprend :

   un module d'acquisition synchrone configuré pour obtenir de manière synchrone des informations de nuage de points et des informations d'image en utilisant un capteur LiDAR et un capteur d'image;

un premier module de réseau configuré pour entrer les informations d'image dans un premier réseau neuronal convolutif entraîné pour extraire des informations multi-caractéristiques de chaque point de pixel dans les informations d'image, les informations multi-caractéristiques comprenant au moins des informations de couleur et des informations d'identification de cible de chaque point de pixel ;

un module de projection de nuage de points configuré pour projeter un nuage de points laser du capteur LiDAR sur l'image, faire correspondre chaque point laser dans les informations de nuage de points à un point de pixel correspondant, puis ajouter les informations multi-caractéristiques du point de pixel aux informations de nuage de points correspondantes ;

un second module de réseau configuré pour entrer les informations de nuage de points présentant les informations multi-caractéristiques dans un second réseau neuronal convolutif entraîné pour délivrer en sortie une catégorie de chaque cible 3D.

5. Dispositif de détection basé sur la fusion d'informations d'image et de nuage de points, comprenant :

   un processeur ;
   une mémoire configurée pour stocker des instructions exécutables du processeur ;
   dans lequel le processeur est configuré pour exécuter les étapes du procédé de détection basé sur la fusion d'informations d'image et de nuage de points selon l'une quelconque des revendications 1 à 3 en exécutant des instructions exécutables.

6. Support de stockage lisible par ordinateur utilisé pour stocker un programme, dans lequel le procédé de détection basé sur la fusion d'informations d'image et de nuage de points selon l'une quelconque des revendications 1 à 3 est réalisé lorsque le programme est exécuté.

Synchronously obtaining point cloud information and image information by using a LiDAR sensor and an image sensor

S110

Inputting the image information into a trained first convolutional neural network to extract multi-feature information of each pixel point in the image information, the multi-feature information at least including color information and target identification information of each pixel point

S120

Projecting laser point cloud of the LiDAR sensor onto the image, matching each laser point in the point cloud information to a corresponding pixel point, and then adding the multi-feature information of the pixel point to corresponding point cloud information

S130

Inputting the point cloud information having the multi-feature information into a trained second convolutional neural network to output a category of each 3D target

S140

FIG. 1

FIG. 2

21A

42

41

43

FIG. 3

22A

FIG. 4

22A                                      42A

FIG. 5

FIG. 6

600

620

6201

Storage Unit

6203

RAM

ROM

610

6202

6204

6205

Processing
Unit

Cache

630

Display
Unit

640

650

I/O Interface

660

Network Adapter

700

External
Device

FIG. 7

800

Program
Product

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Towards Raw Sensor Fusion in 3D Object Detection.. **RÖVID, ANDRÁS ; BÁLINT-BENCZÉDI, FERENC ; BURGET, PÉTER**. 2019 IEEE 17th World Symposium on Applied Machine Intelligence and Informatics (SAMI). IEEE, 2019, 293-298